# EUROPEAN PATENT APPLICATION

(11) **EP 4 550 262 A1**
(43) Date of publication of application: **07.05.2025**
(21) Application number: 23830759.9
(22) Date of filing: 31.03.2023
(51) Int. Cl.: G06T 7/12, G06V 10/40

(54) **STRUCTURE IMAGE ANALYSIS DEVICE, STRUCTURE IMAGE ANALYSIS METHOD, AND PROGRAM**

(30) Priority: 29.06.2022 JP 2022104471
(71) Applicant: Hitachi, Ltd., Tokyo 100-8280 (JP)
(72) Inventor: KANDA, Takayuki, Tokyo 100-8280 (JP); KURATA, Sayaka, Tokyo 100-8280 (JP)
(74) Representative: Mewburn Ellis LLP
(86) International application number: PCT/JP2023/013636
(87) International publication number: WO 2024/004305

(57) **Abstract**

A feature of a form of a fiber included in a tissue image having no height information can be analyzed. Provided is a tissue image analysis apparatus that includes an edge processing unit that detects an edge in a tissue image including a fiber and performs line segment approximation on the detected edge, a line segment pair specifying unit that draws a plurality of auxiliary lines in a line segment image representing an approximated line segment and specifies a pair of line segments to be analyzed on the basis of a change in luminance of the line segment intersecting the auxiliary line in a direction orthogonal to the line segment, and a feature amount calculation unit that calculates a feature amount, for example, a diameter regarding the fiber on the basis of geometric information of the specified pair of line segments.

## Description

### Technical Field

The present invention relates to a tissue image analysis apparatus, a tissue image analysis method, and a program for analyzing a tissue image.

### Background Art

PTL 1 discloses analysis of a form of a fiber shown in a tissue image which is an image obtained by capturing a tissue, in order to calculate a diameter of the fiber, in which a difference between a height at each position in a planar image of the fiber and an average value of heights of the surfaces of substrates is calculated as the diameter.

### Citation List

### Patent Literature

PTL 1: JP 2020-139239 A

### Summary of Invention

### Technical Problem

However, in PTL **1,** height information for each position is required in order to calculate the diameter of the fiber, and an atomic power microscope or the like, which is a measurement means for obtaining height information, is used. Therefore, consideration is not given to measurement means that cannot obtain height information, such as a scanning electron microscope and an optical microscope, and the tissue images that can be handled are limited to those that include height information. In addition, since it is assumed that fibers do not overlap each other, there is no consideration for the calculation of the diameter of the fiber in a case where there is an overlap, and only some fibers can cope with the overlap.

Due to the above circumstances, there is a demand for a technique capable of analyzing the features of the fiber included in the tissue image having no height information.

### Solution to Problem

One of representative embodiments of the present invention is a tissue image analysis apparatus including: an edge processing unit that detects an edge in a tissue image including a fiber and performs line segment approximation on the detected edge; a line segment pair specifying unit that draws a plurality of auxiliary lines in a line segment image representing an approximated line segment and specifies a pair of line segments to be analyzed on a basis of a change in luminance of the line segment intersecting the auxiliary line in a direction orthogonal to the line segment; and a feature amount calculation unit that calculates a feature amount regarding the fiber on a basis of geometric information of the specified pair of line segments.

One of representative embodiments of the present invention is a tissue image analysis method including: detecting an edge in a tissue image including a fiber and performing line segment approximation on the detected edge; drawing a plurality of auxiliary lines in a line segment image representing an approximated line segment and specifying a pair of line segments to be analyzed on a basis of a change in luminance of the line segment intersecting the auxiliary line in a direction orthogonal to the line segment; and calculating a feature amount regarding the fiber on a basis of geometric information of the specified pair of line segments.

One of the representative embodiments of the present invention is a program causing a computer to function as: an edge processing unit that detects an edge in a tissue image including a fiber and performs line segment approximation on the detected edge; a line segment pair specifying unit that draws a plurality of auxiliary lines in a line segment image representing an approximated line segment and specifies a pair of line segments to be analyzed on a basis of a change in luminance of the line segment intersecting the auxiliary line in a direction orthogonal to the line segment; and a feature amount calculation unit that calculates a feature amount regarding the fiber on a basis of geometric information of the specified pair of line segments.

### Advantageous Effects of Invention

According to the representative embodiment of the present invention, it is possible to analyze the features of the form of the fiber included in the tissue image having no height information.

### Brief Description of Drawings

[FIG. 1] FIG. 1 is a diagram illustrating a hardware configuration of a tissue image analysis apparatus according to a first embodiment.
[FIG. 2] FIG. 2 is a functional block diagram of a tissue image analysis apparatus.
[FIG. 3] FIG. 3 is a diagram illustrating an example of a flow of processing in the tissue image analysis apparatus.
[FIG. 4] FIG. 4 is a diagram for explaining an example of processing performed on a tissue image.
[FIG. 5] FIG. 5 is a diagram illustrating an example of generating a diameter-corresponding line segment from a pair detection line.
[FIG. 6] FIG. 6 is a diagram for explaining a maximum value and a minimum value of a fiber diameter to be measured.
[FIG. 7] FIG. 7 is a diagram illustrating an example of a case where a linear density is high and an example of a case where the linear density is low.
[FIG. 8] FIG. 8 is a diagram illustrating a relationship between the degree of bending of a fiber and the length and number of approximate line segments.
[FIG. 9] FIG. 9 is a diagram illustrating an example of an analysis result.
[FIG. 10] FIG. 10 is a diagram illustrating an example of an input/output screen in the tissue image analysis apparatus.
[FIG. 11] FIG. 11 is a diagram for explaining analysis of gaps according to a second embodiment.

### Description of Embodiments

Hereinafter, embodiments according to the present invention will be described. Further, the present invention is not interpreted in a limited way to the following embodiments. A person skilled in the art can easily understand that the specific configurations may be changed within a scope not departing from the ideas and the spirit of the present invention.

In the configurations of the embodiments described below, the same reference numerals are commonly used for the same portions or portions having similar functions in different drawings, and redundant description may be omitted. When there are a plurality of elements having the same or similar functions, different subscripts may be given for the same reference numerals for explanation. However, when there is no need to distinguish between a plurality of elements, the description may be omitted with subscripts omitted.

The notations of "first", "second", and "third" in this specification are attached in order to identify the components, but not necessarily used to indicate the number, the order, or the contents. In addition, a number for identifying a component is used for each context, and a number used in one context does not necessarily indicate the same configuration in another context. In addition, it does not prevent a component identified by a certain number from also functioning as a component identified by another number.

The position, size, shape, range, and the like of each element illustrated in the drawings and the like may not necessarily represent the actual position, size, shape, range, and the like, in order to facilitate understanding of the invention. For this reason, the present invention is not necessarily limited to the position, size, shape, range, and the like disclosed in the drawings and the like.

One feature of the embodiment described in detail below is that line segment approximation is performed on an edge in a tissue image, information on an existence direction of the fiber is added to a line segment based on a change in luminance around an intersection position between an auxiliary line drawn on the image and an approximate line segment, and the fiber is detected to obtain a fiber diameter or the like.

### (First Embodiment)

A tissue image analysis apparatus according to a first embodiment of the present invention will be described. The tissue image analysis apparatus includes an edge processing unit that detects an edge in a tissue image including a fiber and performs line segment approximation on the detected edge, a line segment pair specifying unit that draws a plurality of auxiliary lines in a line segment image representing an approximated line segment and specifies a pair of line segments to be analyzed on the basis of a change in luminance of the line segment intersecting the auxiliary line in a direction orthogonal to the line segment, and a feature amount calculation unit that calculates a feature amount regarding the fiber on the basis of geometric information of the specified pair of line segments.

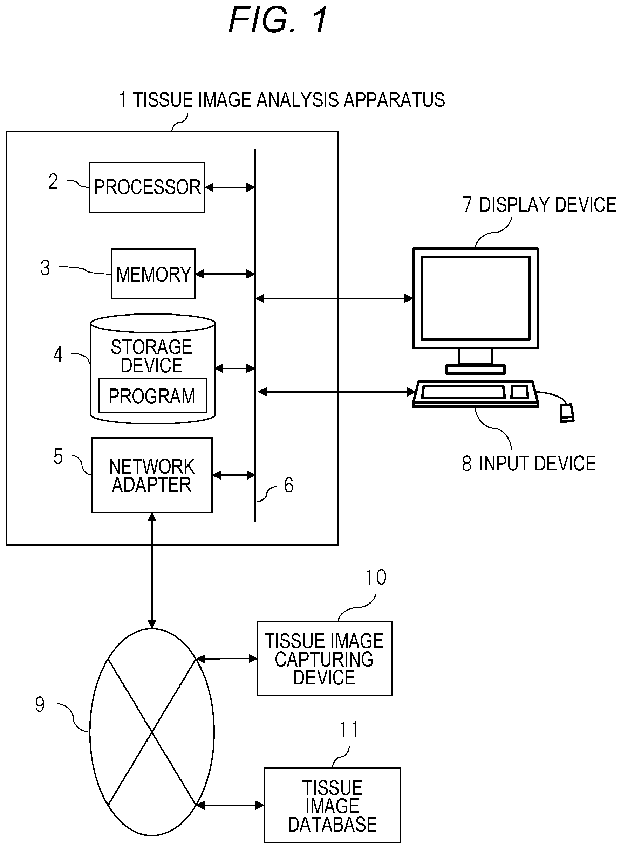

FIG. 1 is a diagram illustrating a hardware configuration of a tissue image analysis apparatus according to the first embodiment. As illustrated in FIG. 1, a tissue image analysis apparatus 1 is, for example, a computer, and is configured such that a processor 2, a memory 3, a storage device 4, and a network adapter 5 are connected to be capable of transmitting and receiving signals by a system bus **6.** In addition, the tissue image analysis apparatus 1 is connected to a tissue image capturing device 10 or a tissue image database 11 via a network 9 so as to be able to transmit and receive signals, and a display device 7 and an input device 8 are connected. Here, "to be able to transmit and receive signals" indicates a state in which signals can be transmitted and received to each other or from one to the other regardless of whether they are electrically or optically wired or wireless.

The processor 2 is a device that controls the operation of each component and executes a program stored in the storage device 4. The memory 3 stores the program executed by the processor 2 and the progress of arithmetic processing. The storage device 4 is a device that stores a program executed by the processor 2 and data necessary for executing the program, and is specifically, for example, a hard disk drive (HDD), a solid state drive (SSD), or the like. The network adapter 5 is for connecting the tissue image analysis apparatus 1 to the network 9 such as a local area network (LAN), a telephone line, or the Internet. Various data handled by the processor 2 may be transmitted and received to and from the outside of the tissue image analysis apparatus 1 via the network 9 such as a LAN.

The display device 7 is a device that displays an analysis result or the like of the tissue image analysis apparatus 1, and is specifically, for example, a liquid crystal display, a touch panel, or the like. The input device 8 is an operation device by which an operator gives an operation instruction to the tissue image analysis apparatus 1, and is specifically, for example, a keyboard, a mouse, a touch panel, or the like. A pointing device such as a track pad or a track ball may be used instead of the mouse.

The tissue image capturing device 10 is a device that captures a tissue image, and is, for example, a scanning electron microscope or an optical microscope. The tissue image database 11 is a database system that stores tissue images and the like captured by the tissue image capturing device 10.

Thus, a functional block diagram of the tissue image analysis apparatus 1 according to the first embodiment will be described.

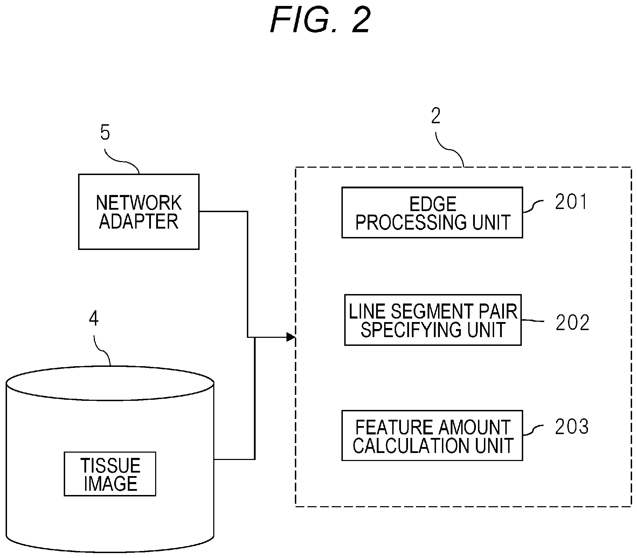

FIG. 2 is a functional block diagram of the tissue image analysis apparatus. Each functional block illustrated in FIG. 2 may be realized by dedicated hardware using an application specific integrated circuit (ASIC), a field-programmable gate array (FPGA), or the like, or may be realized by a computer, that is, the processor 2 executing a program. In the following description, a case where the tissue image analysis apparatus 1 is a computer and the computer functions as each functional block by executing a program will be described.

The tissue image analysis apparatus 1 includes an edge processing unit 201, a line segment pair specifying unit 202, and a feature amount calculation unit 203 as functional blocks. In addition, the storage device 4 stores a tissue image or the like captured by the tissue image capturing device 10. Hereinafter, each functional block will be described.

The edge processing unit 201 performs various image processing on the edge of the tissue image. This image processing includes edge detection processing of detecting an edge and line segment approximation processing of approximating the edge with a line segment. Hereinafter, this approximated line segment is referred to as an approximate line segment or simply a line segment.

The line segment pair specifying unit 202 performs a process of specifying a line segment pair corresponding to a place suitable for measuring the diameter of the fiber. This processing includes direction analysis processing of drawing an auxiliary line on a line segment image representing an approximate line segment, specifying a position of an intersection between the auxiliary line and the line segment, and adding information indicating an existence direction of the fiber to the line segment based on a change in luminance around a position corresponding to the position in the tissue image, and line segment pair detection processing of detecting a line segment pair to be analyzed on the basis of the information added to the line segment.

The feature amount calculation unit 203 calculates a feature amount such as a diameter and an angle of a fiber on the basis of geometric information of the detected line segment pair, and outputs an analysis result. The analysis result may be, for example, a histogram of the feature amount in addition to various feature amounts.

Thus, an example of a flow of processing in the tissue image analysis apparatus 1 will be described for each step with reference to the drawings.

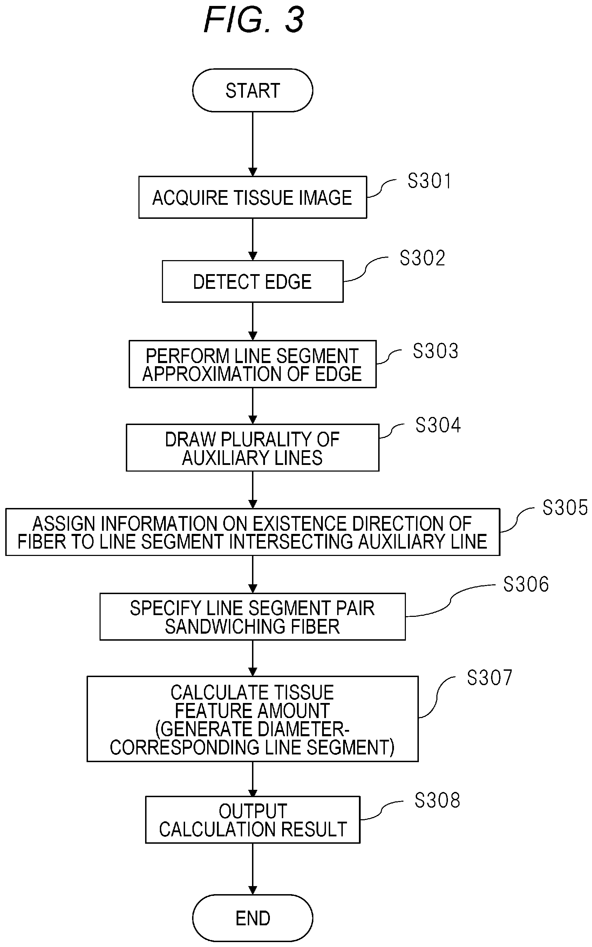

FIG. 3 is a diagram illustrating an example of a flow of processing in the tissue image analysis apparatus 1. As illustrated in FIG. 3, in step S301, the edge processing unit 201 acquires the tissue image by reading from the storage device 4 or receiving from the outside of the tissue image analysis apparatus 1 via the network adapter 5. The tissue image is assumed to be an image having no height information, and is, for example, a grayscale image acquired by an electron microscope, a color format image acquired by an optical microscope, a multi-channel image acquired by a multispectral camera, or the like.

In step S302, the edge processing unit 201 detects an edge from the tissue image and creates a binarized image based on the detection result.

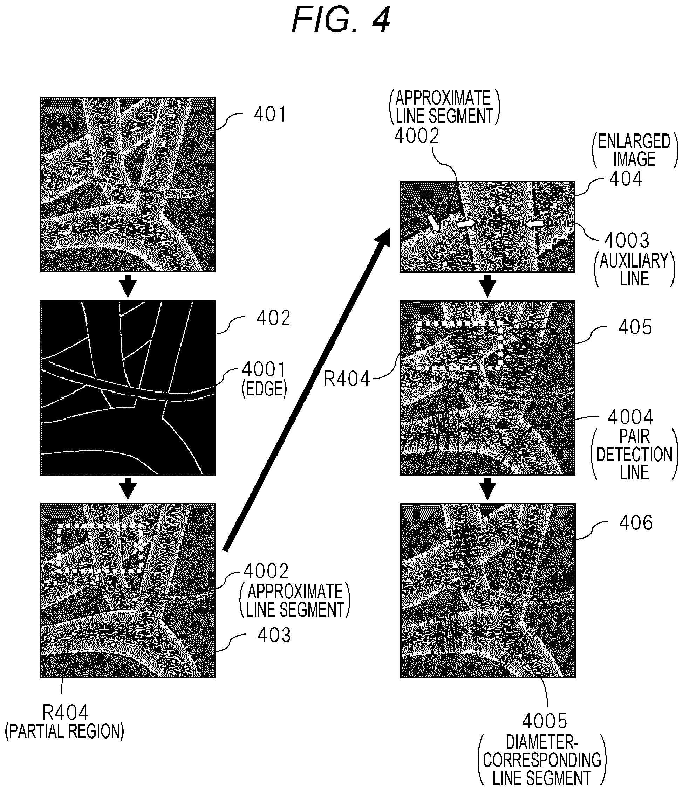

FIG. 4 is a diagram for explaining an example of processing performed on a tissue image. For example, in a case where the tissue image is an input image 401 illustrated in the first stage on the left side of FIG. 4, an edge extraction image 402 illustrated in the second stage on the left side of FIG. 4 is created as a binarized image, and a detected edge 4001 is represented as a white line.

For the detection of an edge, an arbitrary method is used, and for example, the edge may be detected by differentiating a spatial change in luminance of the tissue image and binarizing based on the obtained value, or may be detected using a method known as Canny method. The change in luminance can be generally considered as a change in pixel value. Here, the range, that is, the kernel size when differentiation with respect to the spatial change in luminance is performed may be designated to adjust the spread of the edge to be detected.

The generated binarized image is a black-and-white image in which an edge portion corresponding to the contour of the fiber corresponds to white and the other portion corresponds to black. As the binarized image, a black-and-white image in which an edge portion corresponding to the contour of the fiber corresponds to black and the other portion corresponds to white may be generated.

In step S303, the edge processing unit 201 performs line segment approximation of the edge on the binarized image in which the edge is detected, and associates the obtained approximate line segment with the tissue image. For example, in a line segment approximate image 403 illustrated in the third stage on the left in FIG. 4, an approximate line segment 4002 corresponding to an edge as illustrated as a black broken line is obtained. An arbitrary method is used for approximation by a line segment of an edge, and for example, approximation may be performed by a method known as Hough transform, or approximation may be performed by a method known as Fast Line Detector.

In step S304, the line segment pair specifying unit 202 draws a plurality of auxiliary lines in the line segment image representing the approximate line segment corresponding to the edge. The plurality of auxiliary lines are obtained, for example, by drawing the auxiliary lines while changing at least one of the distance interval and the angular interval by a certain amount.

In step S305, the line segment pair specifying unit 202 adds information indicating the existence direction of the fiber to the approximate line segment intersecting the auxiliary line. The determination of the existence direction of the fiber with respect to the approximate line segment can be performed by a method of comparing luminance or color between both sides of the approximate line segment, that is, one side and the other side of the approximate line segment in the direction orthogonal to the longitudinal direction of the approximate line segment in the tissue image. An enlarged image 404 obtained by enlarging a partial region R404 which is a part of the region of the line segment approximate image 403 is illustrated in the first stage on the right side of FIG. 4. In the case of the enlarged image 404, the luminance on the tissue image on both sides of the approximate line segment can be compared for the approximate line segment intersecting an auxiliary line 4003 indicated by the dotted line, and the brighter side, that is, the side with higher luminance can be determined as the existence direction of the fiber. In the enlarged image 404 of FIG. 4, the existence direction of the fiber is represented by a white arrow.

For easy understanding, there is only one auxiliary line 4003 shown in the enlarged image 404 of FIG. 4, but actually, a plurality of auxiliary lines having different positions or angles are drawn on the line segment image, and information indicating the existence direction of the fiber is added to a large number of approximate line segments. In a case where the tissue image is a color image, the existence direction of the fiber can be determined by similar processing by using only a channel of a specific color or performing grayscale conversion.

In step S306, the line segment pair specifying unit 202 sets a pair of line segments (hereinafter, also referred to as a line segment pair) sandwiching the fiber among the plurality of approximate line segments as an analysis site suitable for analysis. In order to specify the line segment pair, a method is used in which the existence directions of the fibers at points where the auxiliary line and the approximate line segment intersect are compared, and a combination of line segments in which the existence directions of the fibers face each other is specified as a line segment pair.

For example, in the case of the enlarged image 404 illustrated in the first stage on the right side of FIG. 4, when examined from the left side on the auxiliary line 4003 indicated by the black dotted line, the existence directions of the fibers at three points where the auxiliary line 4003 and the approximate line segment intersect are rightward, rightward, and leftward with respect to the drawing, respectively. Among the line segments corresponding to these three intersections, a combination of line segments facing each other in the existence direction of the fiber, that is, a line segment corresponding to the second intersection from the left and a line segment corresponding to the third intersection from the left can be specified as a line segment pair suitable for analysis.

In addition, as described above, a plurality of auxiliary lines can be drawn on the line segment image, and the distance interval and the rotation angular interval of the auxiliary lines can be set. Here, in a case where the distance interval and the angular interval are changed by a certain amount and the auxiliary line is drawn, as the change amount is reduced, more pairs can be easily specified on the image, but the processing time also increases accordingly, and thus the change amount may be appropriately adjusted. For example, the distance interval between the auxiliary lines is preferably set to 0.1 to 50% of the length of the longest side of the image. This corresponds to 1 to 500 pixels in a case where the length of the longest side of the image is 1000 pixels. The rotation angular interval of the auxiliary line is preferably set to 1 to 90 degrees.

An example of a case where the line segment pair is specified using the plurality of auxiliary lines is a line segment pair detection image 405 illustrated in the second stage on the right side of FIG. 4. In the line segment pair detection image 405, a line indicating a site specified as a line segment pair, that is, a pair detection line 4004 which is a line connecting the line segments of the specified line segment pair is represented by a black straight line.

In step S307, the feature amount calculation unit 203 calculates the feature amount of the tissue on the basis of the processing results so far.

First, in the calculation of the fiber diameter value, the angle of each of the two approximate line segments located at both ends of the pair detection line is obtained as the angle with respect to the pair detection line drawn at the analysis site specified as the line segment pair as exemplified in the line segment pair detection image 405. Next, on the basis of the obtained angles, the pair detection line is converted into a line segment corresponding to the diameter to generate a diameter-corresponding line segment.

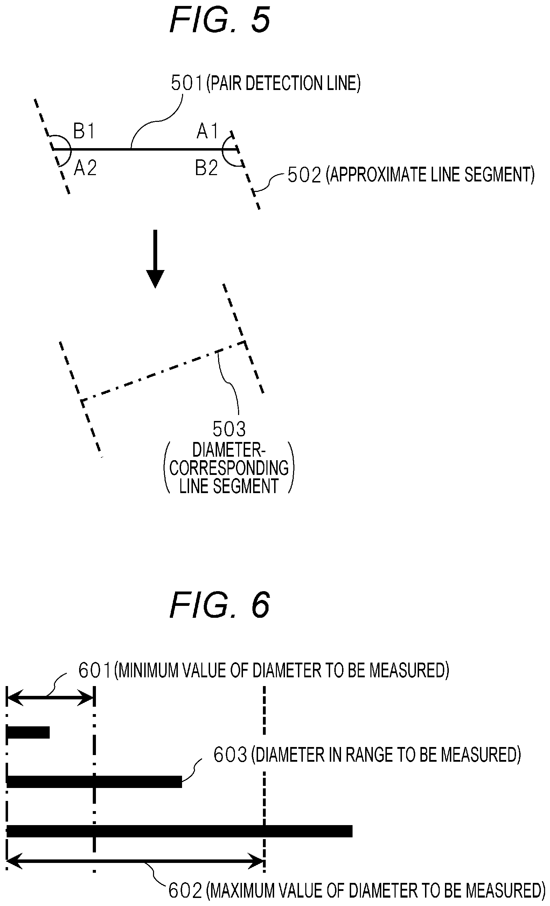

FIG. 5 is a diagram illustrating an example of generating a diameter-corresponding line segment from a pair detection line. As illustrated in FIG. 5, for example, the average of the angles of the alternate angles (a combination of the upper right corner A1 and the lower left corner A2 or a combination of the upper left corner B1 and the lower right corner B2) with respect to the pair detection lines for two approximate line segments 502 located at both ends of a pair detection line 501 is obtained. Then, the pair detection line 501 is rotated by an angle obtained by subtracting the average angle from 90 degrees. At this time, in the case of the combination of the corner A1 and the corner A2, the counterclockwise direction is positive, and in the case of the combination of the corner B1 and the corner B2, the clockwise direction is positive. Then, after both ends of each approximate line segment 502 are extended, the lengths of both ends of the pair detection line 501 after rotation are adjusted so as to be in contact with the both ends. Through these processes, the pair detection line 501 is converted into a line segment corresponding to the diameter, and the converted line segment is set as a diameter-corresponding line segment 503.

The length of the diameter-corresponding line segment can be obtained as the diameter of the fiber. In a diameter measurement image 406 illustrated in the third stage on the right side of FIG. **4****,** a diameter-corresponding line segment 4005 is represented by a black one-dot chain line.

In addition, an image such as noise may be mixed in the input tissue image. When noise or the like is mixed in the tissue image, a short pair detection line generated by noise or the like is generated, which may adversely affect the measurement of the fiber diameter. Therefore, in preparation for such a case, an allowable range of the diameter of the fiber to be measured may be set, and in a case where the value of the measured diameter is out of the allowable range, the diameter may be excluded from the analysis result, or a line segment pair from which the diameter is calculated may be excluded from the analysis target.

FIG. 6 is a diagram for explaining the maximum value and the minimum value of the diameter of the fiber to be measured. As illustrated in FIG. 6, by setting a minimum value 601 and a maximum value 602 of the diameter of the fiber to be measured, the length of a diameter 603 in the range to be measured can be narrowed down.

For example, by appropriately setting the allowable minimum value of the diameter, it is possible to exclude a short pair detection line caused by minute noise or the like in the image. In addition, for example, by appropriately setting the allowable maximum value of the diameter, it is possible to exclude a long pair detection line due to an erroneous pair. The minimum value of the diameter is preferably in a range of 0.1 to 50% of the longest side of the image, and the maximum value of the diameter is preferably 1 to 100% of the longest side of the image. At this time, the maximum value is set to a value larger than the minimum value. That is, in a case where the length of the longest side of the image is 1000 pixels, the minimum value is preferably in the range of 1 to 500 pixels, and the maximum value is preferably in the range of 10 to 1000 pixels.

In addition, the angle of the fiber can be obtained based on the angle in the longitudinal direction of the line segment constituting the specified line segment pair. Then, the fiber angle distribution can be obtained by obtaining the fiber angles for all line segment pairs.

Furthermore, the ratio of the length between the line segments actually specified as the line segment pair on the auxiliary line to the length of the auxiliary line used for specifying the line segment pair, that is, the linear density becomes higher as the fibers are more densely arranged in the image. Therefore, a value corresponding to the degree of density of fibers can be calculated from the linear density.

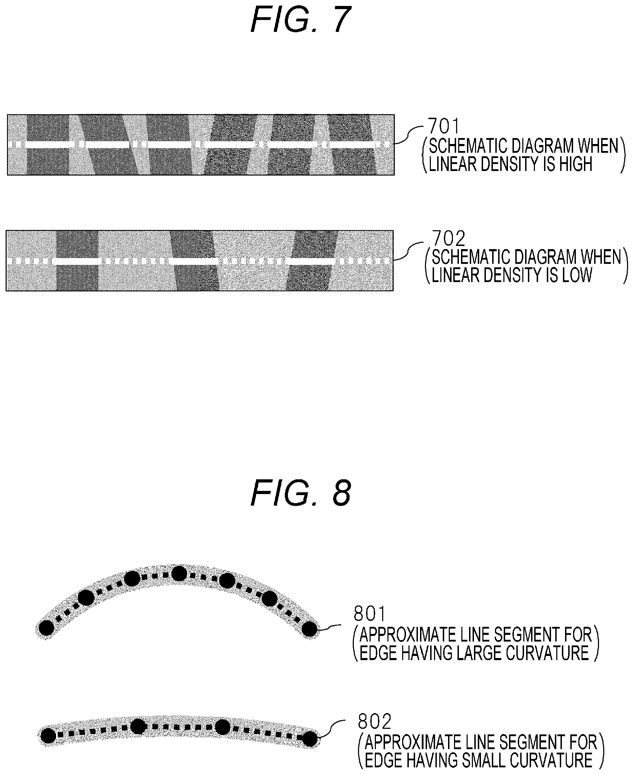

FIG. 7 is a diagram illustrating an example of a case where the linear density is high and an example of a case where the linear density is low. FIG. 7 illustrates a schematic diagram 701 in a case where the linear density is high and a schematic diagram 702 in a case where the linear density is low. As illustrated in the schematic diagrams 701 and 702, when the auxiliary line indicated by the white dotted line is drawn in the image, the ratio of the length occupied by the portion specified as the pair detection line indicated by the white solid line becomes higher as the fibers indicated in dark color are densely arranged. That is, this ratio is higher in the case of the schematic diagram 701 in which the fibers are more densely packed. Thus, a value corresponding to the degree of density of fibers can be calculated.

In addition to the above, a value corresponding to the degree of bending of the fiber can also be calculated from the distribution of the lengths of the approximate line segments exemplified in the line segment approximate image 403 of FIG. 4.

FIG. 8 is a diagram illustrating the relationship between the degree of bending of the fiber and the length and number of approximate line segments. FIG. 8 illustrates a schematic diagram 801 of an approximate line segment for an edge having a large curvature and a schematic diagram 802 of an approximate line segment for an edge having a small curvature. In FIG. 8, the edge is represented by a dark thick line, and the approximate line segment is represented by a linear dotted line in which an end point is indicated by a black circle. As illustrated in the schematic diagrams 801 and 802, as the curvature of the edge increases, the length of the approximate line segment decreases while the number of the approximate line segments increases. That is, it is possible to grasp the degree of bending of the fiber on the basis of information indicating whether the length distribution of the approximate line segment is shorter or longer.

In step S308, the feature amount calculation unit 203 outputs each feature amount that is an analysis result, that is, a calculation result. For example, the feature amount calculation unit 203 may output each feature amount calculated in step S307 as it is, or may output information representing a histogram of the feature amount.

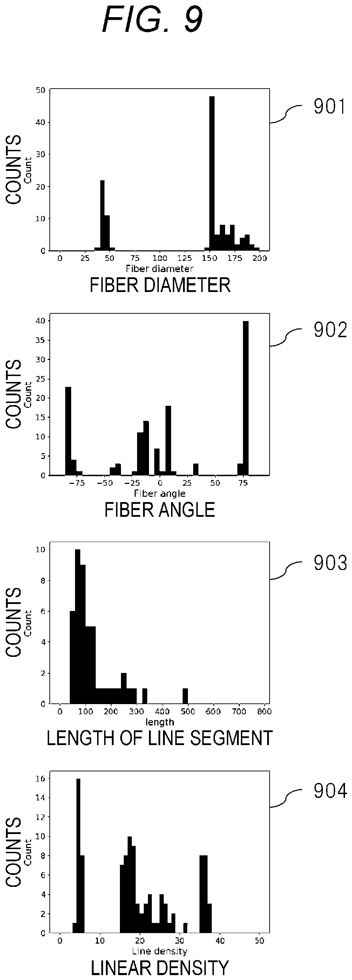

FIG. 9 is a diagram illustrating an example of an analysis result. In FIG. 9, as the analysis results, a diameter histogram 901, an angle histogram 902, a length histogram 903 of an approximate line segment forming a line segment pair, and a linear density histogram 904 are illustrated in order from the top.

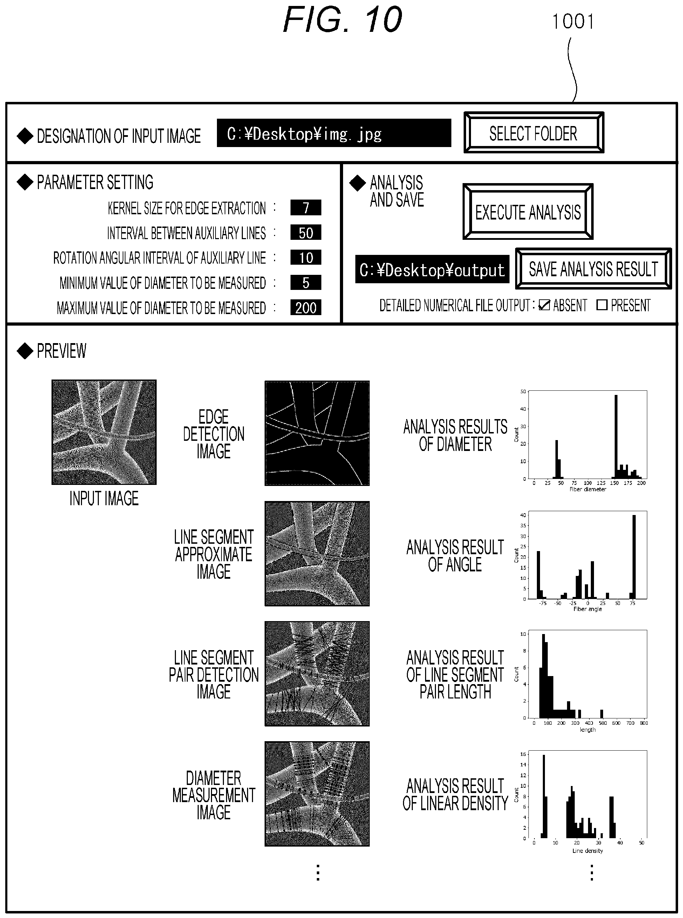

FIG. 10 is a diagram illustrating an example of an input/output screen in the tissue image analysis apparatus 1. In an input/output screen 1001 illustrated in FIG. 10, a file name of an input image in which a fibrous object is captured is designated in a designation field of the input image. Note that a plurality of images stored in a folder may be designated by clicking a button labeled with "Select folder". In the parameter setting field, various parameters for performing the analysis processing are set. Examples of the various parameters include a kernel size of edge extraction, a distance interval of the auxiliary line, a rotation angular interval of the auxiliary line, a minimum value of a diameter to be measured, and a maximum value of a diameter to be measured.

When an "Execute analysis" button is clicked after the input image is designated and the parameters are set, the analysis is executed, and the analysis result is displayed in the preview field. For example, as illustrated in FIG. 10, the analysis result to be displayed includes an edge detection image, a line segment approximate image, a line segment pair detection image, a diameter measurement image, and the like. Examples of the analysis result to be displayed include a diameter histogram that is an analysis result of the diameter of the fiber, an angle histogram of an approximate line segment which is an analysis result of the angle of the fiber, a length histogram of the line segment pair which is an analysis result of the length of the line segment constituting the line segment pair, that is, the line segment pair length, a linear density histogram that is an analysis result of the density of the fiber, and the like, as illustrated in FIG. 10. These analysis results are saved by clicking "Save analysis result". In addition, in a case where "Present" is selected in the setting of the detailed numerical file output of the analysis result, the detailed numerical file of the analysis result is also saved.

As described above, according to the first embodiment, since the analysis result regarding the diameter and the angle is output without any problem even in a case where fibers in the tissue image overlap each other, it is possible to analyze the features of the form of fibers included in the tissue image having no height information. Furthermore, the analysis result, that is, the feature amount may be incorporated into machine learning or the like and used for optimization of a manufacturing method or performance. In addition, since the analysis of the tissue image is performed by arithmetic processing, it is possible to speed up and save labor as compared with a case where a human performs equivalent work.

### (Second Embodiment)

In the first embodiment, the description has been given focusing on the analysis of the fiber. On the other hand, the features of the region where no fiber is present, that is, a gap portion may be important. Therefore, in a second embodiment, the analysis of gaps will be described. Since the difference from the first embodiment is the presence or absence of gap analysis, gap analysis will be mainly described. Since the hardware configuration and the functional block diagram of the tissue image analysis apparatus 1 are the same as those of the first embodiment, description thereof is omitted, and since the flow of processing is similar to that of the first embodiment, description thereof is simplified.

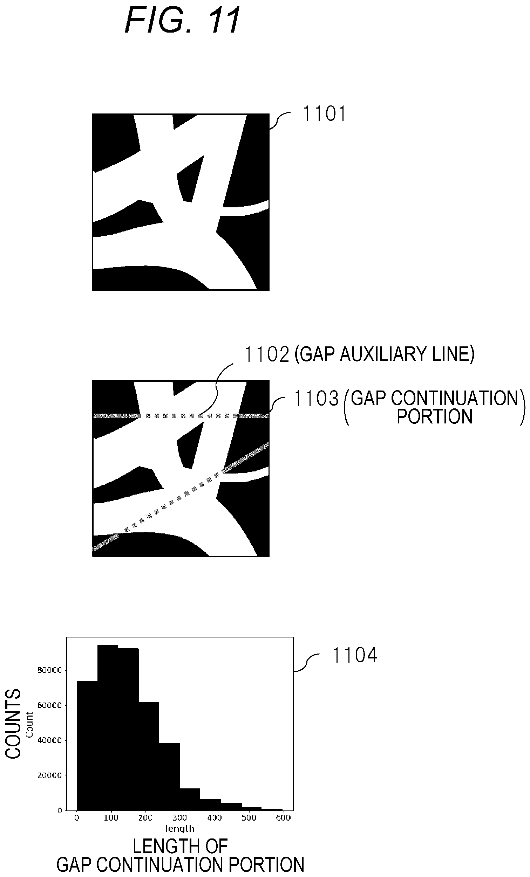

FIG. 11 is a diagram for explaining analysis of gaps according to the second embodiment. In order to analyze the gap portion, it is first necessary to specify the gap portion. However, the contrast and brightness of the input image are not always constant, and the ratio of the gap portion in the image is not always constant. Therefore, there is a possibility that the gap portion cannot be appropriately extracted by a binarization method for obtaining a threshold from luminance distribution or the like of the entire image, for example, a method known as Otsu's binarization.

Therefore, after the line corresponding to the fiber diameter, that is, the pair detection line is acquired by the method of the first embodiment, the position of the pair detection line and the luminance on the input image corresponding to the pair detection line are specified. Then, on the basis of the specified luminance, in the input image, that is, the tissue image, the region of the pixel having the luminance in which the difference from the specified luminance is within a certain level is painted white, so that the portion where the fiber is present can be specified. Conversely, a portion where no fiber is present, that is, a region different from the region painted white can be specified as the gap portion. In a gap image 1101 illustrated in the upper part of FIG. 11, the gap portion is expressed in black, and the portion where the object exists is expressed in white.

Next, the gap portion can be analyzed by a method known as an intercept method. In the middle part of FIG. 11, a gap continuation portion 1103 indicated by a solid line is illustrated on a gap auxiliary line 1102 indicated by a dotted line. Then, the length of the gap continuation portion on the gap auxiliary line 1102 is calculated as the feature amount regarding the fiber. That is, the length of the gap continuation portion is acquired as an index related to the size of the gap on the image. That is, by drawing the gap auxiliary lines at various angles and aggregating the lengths of the gap continuation portions, the size of the gap in the image can be grasped from the distribution of the lengths.

In the lower part of FIG. 11, a histogram 1104 of the length of the gap is illustrated as an analysis result of the gap portion. The feature amount calculation unit 203 may output information representing such a histogram of the lengths of the gap portions.

As described above, according to the second embodiment, even in a case where the contrast and brightness of the input image and the ratio of fibers are not constant, the gap portion included in the tissue image can be analyzed, and the analysis result of the length of the gap is output. This makes it possible to obtain not only the feature amount of the fiber but also the feature amount of the gap portion.

The tissue image analysis apparatus and the tissue image analysis method according to the embodiments of the present invention have been described above. The present invention is not limited to the examples of the above embodiments, and can be embodied by modifying the components without departing from the gist of the invention.

For example, a program for causing a computer to function as each functional block of the tissue image analysis apparatus is also an embodiment of the present invention. Furthermore, a tangible computer-readable storage medium in which the program is non-temporarily stored is also an embodiment of the present invention.

### Reference Signs List

- 1: tissue image analysis apparatus
- 2: processor
- 3: memory
- 4: storage device
- 5: network adapter
- 6: system bus
- 7: display device
- 8: input device
- 9: network
- 10: tissue image capturing device
- 11: tissue image database
- 201: edge processing unit
- 202: line segment pair specifying unit
- 203: feature amount calculation unit
- 401: input image
- 402: edge extraction image
- 403: line segment approximate image
- 404: enlarged image
- 405: line segment pair detection image
- 406: diameter measurement image
- 4001: edge
- 4002: approximate line segment
- 4003: auxiliary line
- 4004: pair detection line
- 4005: diameter-corresponding line segment
- 501: pair detection line
- 502: approximate line segment
- 503: diameter-corresponding line segment
- 601: minimum value of diameter to be measured
- 602: maximum value of diameter to be measured
- 603: diameter in range to be measured
- 701: schematic diagram when linear density is high
- 702: schematic diagram when linear density is low
- 801: schematic diagram of approximate line segment for edge having large curvature
- 802: schematic diagram of approximate line segment for edge having small curvature
- 901: diameter histogram
- 902: angle histogram
- 903: length histogram of paired approximate line segments
- 904: linear density histogram
- 1001: input/output screen
- 1101: gap image
- 1102: gap auxiliary line
- 1103: gap continuation portion
- 1104: histogram of length of gap

## Claims

1. A tissue image analysis apparatus comprising:
an edge processing unit that detects an edge in a tissue image including a fiber and performs line segment approximation on the detected edge;
a line segment pair specifying unit that draws a plurality of auxiliary lines in a line segment image representing an approximated line segment and specifies a pair of line segments to be analyzed on a basis of a change in luminance of the line segment intersecting the auxiliary line in a direction orthogonal to the line segment; and
a feature amount calculation unit that calculates a feature amount regarding the fiber on a basis of geometric information of the specified pair of line segments.

2. The tissue image analysis apparatus according to claim 1, wherein the line segment pair specifying unit draws a plurality of the auxiliary lines by changing at least one of a distance interval and an angular interval in the tissue image, adds information on an existence direction of the fiber to the line segment intersecting the auxiliary line on a basis of a change in luminance in a direction orthogonal to a longitudinal direction of the line segment, and specifies the line segments in which the added existence directions face each other as a pair of the line segments.

3. The tissue image analysis apparatus according to claim 1, wherein the feature amount calculation unit obtains an angle of each of two line segments as an angle with respect to a pair detection line that is a line connecting the two line segments constituting the specified pair, converts the pair detection line into a diameter-corresponding line segment corresponding to a diameter of the fiber on a basis of the obtained angle, and calculates a diameter of the fiber as the feature amount on a basis of a length of the diameter-corresponding line segment.

4. The tissue image analysis apparatus according to claim **1,** wherein the feature amount calculation unit calculates an angle of the fiber as the feature amount on a basis of an angle in a longitudinal direction of the line segment constituting the pair.

5. The tissue image analysis apparatus according to claim **1,** wherein the feature amount calculation unit calculates, as the feature amount, a value corresponding to a degree of density of the fibers on a basis of a ratio of a length of the line segment specified as the pair on the auxiliary line to a length of the auxiliary line.

6. The tissue image analysis apparatus according to claim **1,** wherein the feature amount calculation unit calculates, as the feature amount, a value corresponding to a degree of bending of the fiber on a basis of an approximated distribution of lengths of the line segments.

7. The tissue image analysis apparatus according to claim 1, wherein the feature amount calculation unit specifies luminance on the tissue image corresponding to a pair detection line which is a line connecting two line segments constituting the specified pair, specifies, as a gap portion, a region different from a region of luminance in which a difference from the specified luminance is within a certain level in the tissue image, and calculates a length of the gap portion on a gap auxiliary line as the feature amount.

8. The tissue image analysis apparatus according to claim 1, wherein the feature amount calculation unit outputs information representing a histogram of the feature amount.

9. The tissue image analysis apparatus according to claim 3, wherein in a case where a calculated diameter of the fiber is out of a set allowable range, the line segment pair specifying unit excludes the diameter or the pair on which the diameter is calculated from an analysis target.

10. The tissue image analysis apparatus according to any one of claims 1 to 9, wherein the tissue image is an image obtained by an electron microscope, an optical microscope, or a multispectral camera.

11. A tissue image analysis method comprising:
detecting an edge in a tissue image including a fiber and performing line segment approximation on the detected edge;
drawing a plurality of auxiliary lines in a line segment image representing an approximated line segment and specifying a pair of line segments to be analyzed on a basis of a change in luminance of the line segment intersecting the auxiliary line in a direction orthogonal to the line segment; and
calculating a feature amount regarding the fiber on a basis of geometric information of the specified pair of line segments.

12. A program causing a computer to function as:
an edge processing unit that detects an edge in a tissue image including a fiber and performs line segment approximation on the detected edge;
a line segment pair specifying unit that draws a plurality of auxiliary lines in a line segment image representing an approximated line segment and specifies a pair of line segments to be analyzed on a basis of a change in luminance of the line segment intersecting the auxiliary line in a direction orthogonal to the line segment; and
a feature amount calculation unit that calculates a feature amount regarding the fiber on a basis of geometric information of the specified pair of line segments.
